Europäisches Patentamt

(19) European Patent Office

Office européen des brevets

(11) Numéro de publication: **0 161 216**
A2

(12) # DEMANDE DE BREVET EUROPEEN

(21) Numéro de dépôt: **85810203.1**

(51) Int. Cl.⁴: **G 01 B 21/20**

(22) Date de dépôt: **03.05.85**

(30) Priorité: **08.05.84 CH 2233/84**

(43) Date de publication de la demande:
**13.11.85 Bulletin 85/46**

(84) États contractants désignés:
**AT BE CH DE FR GB IT LI LU NL SE**

(71) Demandeur: **Nilsson, Sven-Arne**
**Route de Belmont 43**
**CH-1093 La Conversion(CH)**

(72) Inventeur: **Nilsson, Sven-Arne**
**Route de Belmont 43**
**CH-1093 La Conversion(CH)**

(54) **Procédé de contrôle électronique de la géométrie du soubassement d'une voiture.**

(57) Procédé: -pour guider une sonde de mesure à l'aide d'un ordinatuer,
-pour stocker sur ordinateur des cotes de différentes voitures, destinées au contrôle électronique de la géométrie du soubassement.

Fig. 7

EP 0 161 216 A2

Utilisation de technique d'informatique pour le contrôle et le redressage de carrosseries et châssis de voitures endommagées.

Le système peut être utilisé sur tous les bancs conventionnels ayant une surface plane usinée, avec des gabarits réglables légers pour marquer les points de mesure, et des gabarits réglables ou universels rigides servant de dispositif de fixation pendant le redressage.

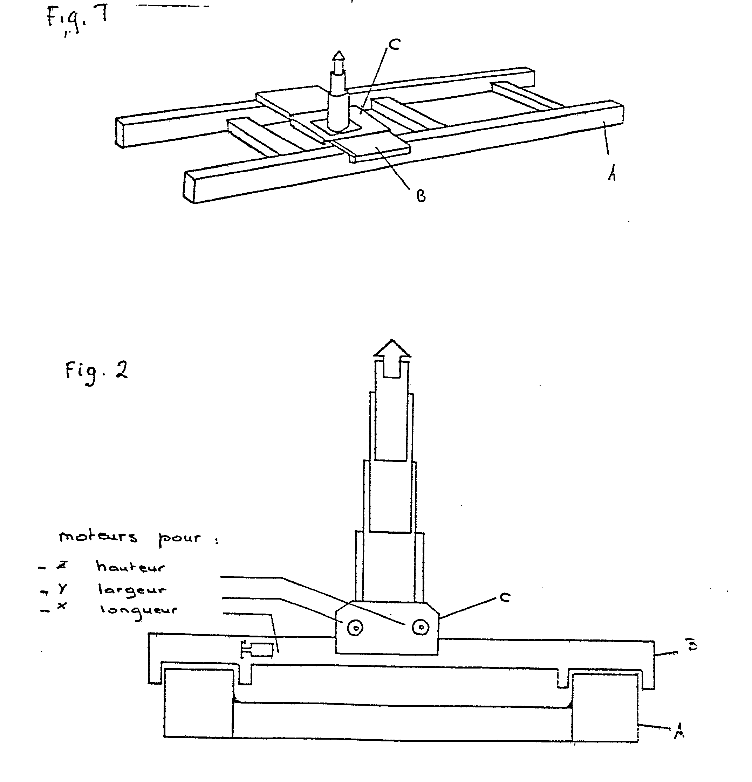

Un dispositif de mesure est monté sur une poutrelle centrale ou sur des barres, (Fig.1) qui sontposées sur la surface plane. L'appareil (Fig.2) a trois moteurs "pas-à-pas" qui déplacent la sonde de mesure dans le sens de la longueur, de la largeur et de la hauteur, et qui peuvent être guidés soit à la main, soit par un ordinateur. Les coordonnées ainsi déterminées peuvent être stockées pour l'utilisation dans un ordinateur.

Pour établir les données géométriques du soubassement d'une voiture, l'appareil est guidé à la main vers les points de mesure établis par les cotes du constructeur. Ces données seront enrégistrées et pourront être stockées dans l'ordinateur, et des fiches techniques pourront être établies.

Afin de contrôler une voiture endommagée ou accidentée pour la réparer, celle-ci est fixée sur le banc selon la méthode conventionnelle avec quatre pinces placées dans les lèvres de soudure du bas de caisse. La poutrelle centrale ou les barres qui servent de support à l'appareil seront centrées par rapport au soubassement en utilisant soit une ligne centrale, soit des points de mesure dans la partie non endommagée de la voiture.

Quand un point est établi et quand on veut le garder pour contrôle, on monte un gabarit universel léger pour marquer la position

Pour les points qui doivent nécessairement rester fixes pendant le redressement, on monte une fixation universelle plus rigide qui peut résister aux forces appliquées.

Revendications: **0161216**

1. Procédé de contrôle électronique des dimensions de la
   carrosserie d'un véhicule consistant à stocker les
   données en vue d'une utilisation par un ordinateur et
   ainsi le stockage des cotes d'un grand nombre de voitures
   de différentes marques et modèles pour pouvoir établir
   les points géométriques dans la carrosserie, qui sont
   essentiels pour la réparation et le redressement des
   voitures endommagées ou accidentées, caractérisé en ce
   qu'il consiste à guider à l'aide de données une sonde de
   mesure pour établir un point géométrique de contrôle,
   dont la position peut ensuite être marquée par un gabarit
   réglable léger, ou fixée par un gabarit réglable ou
   universel rigide.

2. Dispositif pour la mise en oeuvre du procédé selon la
   revendication 1, caractérisé en ce qu'il comporte des
   moyens, servant à mesurer les coordonnées X, Y et Z
   en utilisant des moteurs "pas-à-pas" qui guident une
   sonde de mesure montée sur une surface plane.

0161216

Fig. 7

C

B

A

Fig. 2

moteurs pour :

- Z   hauteur
- Y   largeur
- X   longueur

C

B

A